# EUROPEAN PATENT APPLICATION

(11) **EP 4 339 045 A1**
(43) Date of publication of application: **20.03.2024**
(21) Application number: 23190746.0
(22) Date of filing: 10.08.2023
(51) Int. Cl.: B60T 13/74, F16D 55/224, F16D 65/18, F16D 125/34, F16D 121/24

(54) **BRAKE DEVICE FOR VEHICLE**

(30) Priority: 15.09.2022 JP 2022146916
(71) Applicant: Nabtesco Corporation, Tokyo 102-0093 (JP)
(72) Inventor: Ohno, Tomoya, Chiyoda-ku, Tokyo, 102-0093 (JP)
(74) Representative: Grünecker Patent- und Rechtsanwälte PartG mbB

(57) **Abstract**

A brake device (1) for a vehicle according to one aspect of the present invention includes: a motor (2); a speed reducer (20) configured to receive an output of the motor (2); a conversion mechanism (30) for converting a rotational motion output from the speed reducer (20) into a linear motion; friction members (40A, 40B) configured to receive the linear motion to be pressed against a brake-applied member; a clutch (7) configured to switch between a transmission state in which power transmission is allowed in the power transmission path and a cutoff state in which the power transmission is cut off and a pressing force is retained; a drive control unit (11) for driving the motor (2) in accordance with a brake instruction; and a switching operation control unit (12) configured to switch the clutch (7) from the transmission state to the cutoff state when the motor (2) driven to press the friction members (40A, 40B) against the brake-applied member receives a load exceeding a predetermined level.

## Description

### TECHNICAL FIELD

The present invention relates to a brake device for a vehicle.

### BACKGROUND

Electric brake devices are conventionally known as brake devices for vehicles that brake a vehicle by driving of an electric motor. For example, the electric brake device disclosed in Patent Literature 1 includes a rotating shaft driven by an electric motor, a linear motion mechanism that converts rotation of the rotating shaft into linear motion of a linear motion member, a caliper body that houses the linear motion member so as to be slidable in an axial direction, a friction pad located at the front end of the linear motion member in the axial direction, and a reaction force receiving member that receives a reaction force acting on the linear motion member backward in the axial direction when the linear motion member presses the friction pad. The linear motion mechanism includes a plurality of planetary rollers in contact with the outer diameter surface of the rotating shaft, and an outer ring member arranged to surround the plurality of planetary rollers and serving as the linear motion member. When the outer ring member presses the friction pad forward in the axial direction, the reaction force (brake reaction force) acting on the outer ring member backward in the axial direction is received by the reaction force receiving member.

### RELEVANT REFERENCE

### LIST OF RELEVANT PATENT LITERATURE

Patent Literature 1: Japanese Patent No. 5795908

### SUMMARY

However, the planetary rollers are engaged with the outer ring member and thus are hardly movable in the direction of the brake reaction force. Therefore, the planetary rollers are also subjected to the brake reaction force, which is likely to damage the planetary gear mechanism. The above problem is pronounced particularly in railway vehicles because of the large braking force.

The present invention is intended to overcome the above problem, and one object thereof is to provide a brake device for a vehicle capable of reducing the possibility of damage to a speed reducer due to a brake reaction force without degrading the braking function.

To overcome the above problem, aspects of the present invention are configured as follows. (1) A brake device for a vehicle according to an aspect of the present invention comprises: an electric motor; a speed reducer configured to receive an output of the electric motor and to output a decelerated rotational force; a conversion mechanism for converting a rotational motion output from the speed reducer into a linear motion; a friction member configured to receive the linear motion to be pressed against a brake-applied member of a vehicle, so as to brake the vehicle; a clutch disposed in a power transmission path between the speed reducer and the friction member, the clutch being configured to switch between a transmission state in which power transmission is allowed in the power transmission path and a cutoff state in which the power transmission is cut off and a pressing force applied to the friction member is retained; a drive control unit for driving the electric motor in accordance with a brake instruction received from an external device; and a control unit configured to control operation of the clutch so as to switch the clutch from the transmission state to the cutoff state when the electric motor driven to press the friction member against the brake-applied member receives a load exceeding a predetermined level.

With this configuration, since the power transmission in the power transmission path is cut off when the load applied to the electric motor has exceeded a predetermined value, the reaction force (brake reaction force) generated when the friction member is pressed against the brake-applied member does not act on the speed reducer. This can lower the possibility of damage to the speed reducer due to the brake reaction force. In addition, since the clutch retains the pressing force applied to the friction member, the braking function is not degraded. This can lower the possibility of damage to the speed reducer due to the brake reaction force without degrading the braking function.

(2) In the brake device for a vehicle according to (1) above, the control unit may switch the clutch to the cutoff state when it is determined that the brake instruction has continued at a same value for a predetermined amount of time.

(3) In the brake device for a vehicle according to (1) or (2) above, the control unit may store a current value of a current flowing to the electric motor on a storage unit, before the clutch is switched to the cutoff state and the electric motor is decelerated or stopped, and in response to the brake instruction changing to a different value after the clutch is switched to the cutoff state and the electric motor is decelerated or stopped, the drive control unit may drive the electric motor such that a current flows to the electric motor at the current value stored on the storage unit, before the clutch is switched from the cutoff state to the transmission state.

(4) In the brake device for a vehicle according to (3) above, the control unit may switch the clutch to the transmission state when it is determined that a current value of a current flowing when the electric motor is driven has reached the current value stored on the storage unit.

(5) The brake device for a vehicle according to any one of (1) to (4) above may further comprise a wheel slide detection unit for detecting wheel slide of the vehicle, wherein when the wheel slide has occurred in the vehicle, the control unit may not switch the clutch from the transmission state to the cutoff state until a predetermined amount of time has elapsed after the wheel slide has occurred.

(6) In the brake device for a vehicle according to any one of (1) to (5) above, the clutch may be disposed between the speed reducer and the conversion mechanism.

(7) The brake device for a vehicle according to any one of (1) to (6) above may further comprise a current value sensing unit for sensing a current value of a current flowing to the electric motor, wherein the control unit may switch the clutch to the cutoff state when the current value has exceeded a predetermined value.

### ADVANTAGEOUS EFFECTS

The present invention provides a brake device for a vehicle capable of reducing the possibility of damage to a speed reducer due to a brake reaction force without degrading the braking function.

### BRIEF DESCRIPTION OF THE DRAWINGS

Fig. 1 is a block diagram showing a brake device for a vehicle according to an embodiment.
Fig. 2 is a cross-sectional perspective view schematically showing the brake device for a vehicle according to the embodiment.
Fig. 3 illustrates normal brake control according to the embodiment.
Fig. 4 illustrates wheel slide control according to the embodiment.
Fig. 5 is a flowchart of the normal brake control according to the embodiment.
Fig. 6 is a flowchart of the wheel slide control according to the embodiment.

### DESCRIPTION OF THE PREFERRED EMBODIMENTS

Embodiments of the present invention will now be described with reference to the attached drawings. The following description of the embodiments will be based on a brake device for a railway vehicle as an example of an electric brake device. In the following description, terms such as "parallel," "orthogonal," "around" and "coaxial" describe relative or absolute positions. These terms are not only strictly used but also allow some tolerances and relative differences in angle and distance as long as the same effects can be still produced. In the drawings used for the following description, members are shown to different scales into recognizable sizes.

### <Brake Device for Vehicle>

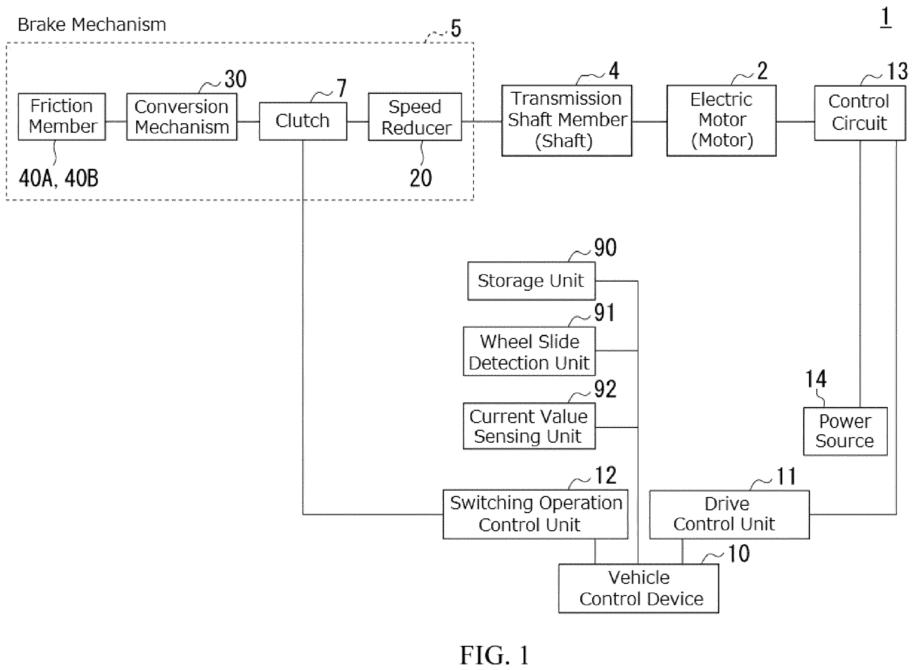

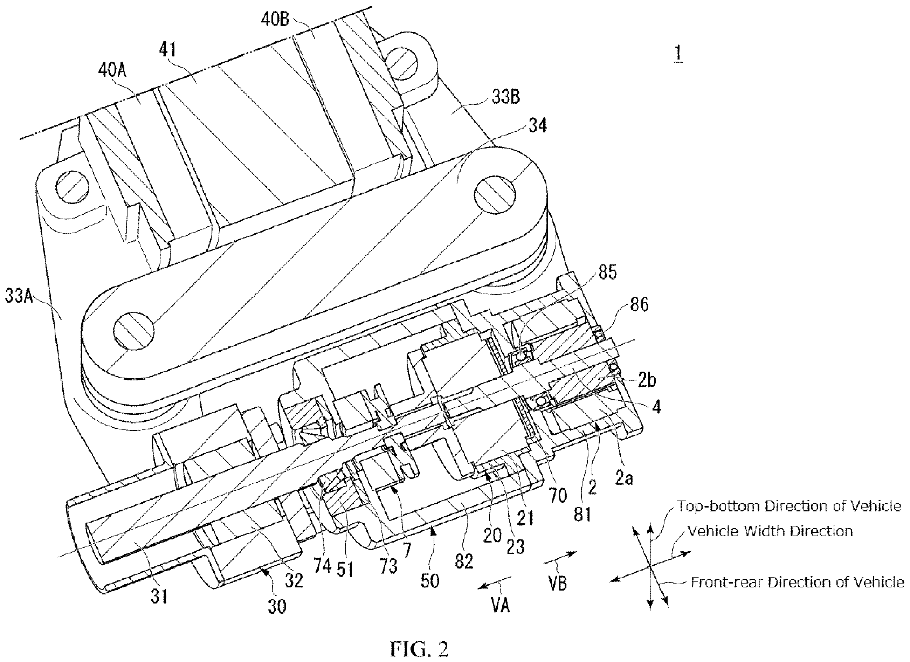

Fig. 1 is a block diagram showing a brake device 1 for a vehicle according to an embodiment. Fig. 2 is a cross-sectional perspective view schematically showing the brake device 1 for a vehicle according to the embodiment. In Fig. 2, the top-bottom direction of the vehicle refers to the top-bottom direction (height direction) of the railway vehicle, the front-rear direction of the vehicle refers to the front-rear direction of the railway vehicle, and the vehicle width direction refers to the width direction of the railway vehicle.

As shown in Fig. 1, the brake device 1 for a vehicle includes an electric motor 2, a transmission shaft member 4, a brake mechanism 5, a vehicle control device 10, a drive control unit 11, a switching operation control unit 12 (an example of a control unit for controlling operation of a clutch), a storage unit 90, a wheel slide detection unit 91, and a current value sensing unit 92.

In this embodiment, the electric motor 2 is an AC electric motor. The electric motor 2 includes a rotor 2b capable of rotating. The transmission shaft member 4 is a shaft 4 fixed to the rotor 2b. The transmission shaft member 4 is hereinafter also referred to as "shaft 4." The brake mechanism 5 includes a speed reducer 20, a clutch 7, a conversion mechanism 30, and friction members 40A and 40B.

The vehicle control unit 10 provides overall control of the components of the railway vehicle. For example, the vehicle control unit 10 controls the drive control unit 11 and the switching operation control unit 12. A control circuit 13 such as an inverter is connected to the electric motor 2. For example, the drive control unit 11 controls the rotational drive of the electric motor 2 via the control circuit 13. The control circuit 13 is connected to a power source 14.

The drive control unit 11 drives the electric motor 2 in accordance with a brake instruction received from the vehicle control device 10 (an example of an external device). For example, the brake instruction is preset in accordance with operation positions of a brake handle operated by the driver. For example, a digital control signal output as the brake instruction varies from notch (degree) 1 to notch 7 in accordance with the operation position of the brake handle. The braking force (the deceleration of the vehicle) differs in accordance with the number of notches. For example, the braking force increases with the increased notches.

For example, the storage unit 90 is a RAM (Random Access Memory) storing a predetermined program. The storage unit 90 stores, for example, current values of the current flowing to the electric motor 2. The data stored on the storage unit 90 is transmitted to the vehicle control device 10.

The wheel slide detection unit 91 detects sliding of the wheel of the railway vehicle. For example, the wheel slide detection unit 91 detects wheel slide based on a comparison between the rotational speed of an axle of the railway vehicle (hereinafter referred to as "the wheel speed") and the speed of translation of the railway vehicle (hereinafter referred to as "the vehicle speed"). For example, the wheel speed is sensed by a rotation sensor such as an encoder that outputs a pulse signal in accordance with the rotational position of the axle. In the rotation sensor, the number of pulses in the pulse signal per unit time corresponds to the wheel speed. For example, the wheel speed may be multiplied by a predetermined factor to calculate a speed comparable with the vehicle speed (hereinafter referred to as "the shaft speed").

The state in which no sliding is occurring between a rail and a wheel in a macro scale is herein referred to as "the adhesion state." In the adhesion state, the vehicle speed and the shaft speed are equal. When sliding occurs between the rail and the wheel, the speed difference between the vehicle speed and the shaft speed increases. In the sliding state where sliding of the wheel has occurred, there is a speed difference between the vehicle speed and the shaft speed. For example, the wheel slide detection unit 91 determines that the railway vehicle is not in the sliding state when the speed difference is equal to or smaller than a threshold value. For example, the wheel slide detection unit 91 determines that the railway vehicle is in the sliding state when the speed difference is larger than the threshold value. The determination result of the wheel slide detection unit 91 is transmitted to the vehicle control device 10.

The current value sensing unit 92 senses a current value of the current flowing to the electric motor 2. The sensing result of the current value sensing unit 92 is transmitted to the vehicle control device 10.

As shown in Fig. 2, the electric motor 2 is disposed along the vehicle width direction. The electric motor 2 includes a stator 2a having a tubular shape and a rotor 2b capable of rotating relative to the stator 2a. The rotor 2b is located on the radially inner side of the stator 2a. The electric motor 2 is an inner-rotor motor. The electric motor 2 will be hereinafter also referred to as "the motor 2."

The shaft 4 extends from the motor 2 in the direction of the rotation axis of the rotor 2b. The shaft 4 is rotated by the rotational force output from the rotor 2b. The shaft 4 extends from the motor 2 in two coaxial directions. The two directions correspond to one direction in the vehicle width direction (the direction toward one side in the vehicle width direction) and the other direction in the vehicle width direction (the direction toward the other side in the vehicle width direction). The rotor 2b has a hollow structure. The shaft 4 extends through the rotor 2b having a hollow structure. The axially one-side portion of the shaft 4 is fixed to the rotor 2b. The shaft 4 is driven since it is coupled to the rotor 2b.

An input gear 70 to which the output of the motor 2 is input is fixed to the shaft 4 extending from the motor 2. The speed reducer 20 receives the rotation of the input gear 70 and outputs a decelerated rotational force to the conversion mechanism 30. The speed reducer 20 includes an output rotator 21 that receives the rotation of the input gear 70 and outputs a decelerated rotational force. The output rotator 21 has a hollow structure. The output rotator 21 has a tubular shape extending along the vehicle width direction. For example, the speed reducer 20 is a precision speed reducer with a hollow structure. For example, the speed reducer 20 includes an eccentric oscillation gear mechanism. The speed reducer 20 includes a tubular case 23 that rotatably retains the input gear 70.

The clutch 7 is provided in a power transmission path between the speed reducer 20 and the friction members 40A, 40B. The clutch 7 of this embodiment is disposed between the speed reducer 20 and the conversion mechanism 30. The clutch 7 switches between a transmission state and a cutoff state. In the transmission state, power transmission is allowed in the power transmission path between the speed reducer 20 and the conversion mechanism 30, and in the cutoff state, the power transmission is cut off and the pressing force applied to the friction members 40A, 40B is retained.

Hereinafter, the time when the clutch 7 is not powered is referred to as "clutch-off time," and the time when the clutch 7 is powered is referred to as "clutch-on time." For example, in the clutch-off time, the clutch 7 is put into the state (transmission state) in which the rotational force of the speed reducer 20 is transmitted to the conversion mechanism 30. For example, in the clutch-on time, the clutch 7 is put into the state (cutoff state) in which the rotational force of the speed reducer 20 is not transmitted to the conversion mechanism 30 (non-transmission state), and the pressing force applied to the friction members 40A, 40B is retained (braking force retention state). For example, the clutch 7 is a non-excited electromagnetic clutch (brake).

The conversion mechanism 30 is mounted to the shaft 4. The conversion mechanism 30 converts the rotational motion of the shaft 4 into linear motion.

The conversion mechanism 30 includes an input rotator 31 to which the rotational force output from the output rotator 21 is input, a linear motion member 32 that converts the rotational motion of the input rotator 31 into linear motion, and arms 33A and 33B that transmit the linear motion generated through conversion by the linear motion member 32 to the friction members 40A and 40B. The linear motion member 32 converts the rotational motion of the input rotator 31 into linear motion in the moving directions VA and VB parallel to the rotation axis of the input rotator 31. In this embodiment, the conversion mechanism 30 is a ball screw mechanism. The input rotator 31 is a male screw 31. The linear motion member 32 is a female screw 32 that meshes with the male screw 31.

A pair of friction members 40A and 40B are arranged in the vehicle width direction so as to sandwich a brake-applied member 41 of the railway vehicle. The linear motion of the female screw 32 in the moving directions VA and VB is transmitted to the friction members 40A and 40B. As a result, the friction members 40A and 40B are pressed against the brake-applied member 41 to brake the railway vehicle.

The brake-applied member 41 is a disc attached to the axle of the railway vehicle. The pair of friction members 40A and 40B constitute a disc brake unit (DBU) that sandwiches the disc on both sides. Of the pair of friction members 40A and 40B, the friction member 40A on one side in the vehicle width direction is hereinafter also referred to as "the first friction member 40A," and the friction member 40B on the other side in the vehicle width direction as "the second friction member 40B."

The brake device 1 for a vehicle includes a housing 50 that houses the shaft 4, the conversion mechanism 30 and other components so that the female screw 32 can move in the moving directions VA and VB. The housing 50 houses the portions of the shaft 4 and the conversion mechanism 30 on one side in the vehicle width direction.

The housing 50 is constituted by a plurality of cover members 81 and 82 coupled together. The plurality of cover members 81 and 82 include a first cover member 81 and a second cover member 82. The first cover member 81 houses the motor 2, and the second cover member 82 houses the speed reducer 20 and the clutch 7.

The first cover member 81 is coupled to the second cover member 82. A first bearing 85 and a second bearing 86 are provided between the first cover member 81 and the shaft 4. The first bearing 85 is located between the motor 2 and the speed reducer 20. The second bearing 86 is located at the end of the shaft 4 on the opposite side to the end on the male screw 31 side.

The conversion mechanism 30 includes the arms 33A and 33B that transmit the linear motion, which is the output of the female screw 32, to the friction members 40A and 40B. The conversion mechanism 30 includes a pair of arms 33A and 33B spaced apart in the vehicle width direction and a coupling member 34 that couples the pair of arms 33A and 33B. Of the pair of arms 33A and 33B, the arm 33A on one side in the vehicle width direction is hereinafter also referred to as "the first arm 33A," and the arm 33B on the other side in the vehicle width direction as "the second arm 33B."

The first arm 33A extends along the front-rear direction of the vehicle so as to connect between the female screw 32 and the first friction member 40A. The first arm 33A has a length along the front-rear direction of the vehicle. One end of the first arm 33A in its longitudinal direction is coupled to the female screw 32 so as to be rotatable relative to the female screw 32 about an axis along the top-bottom direction of the vehicle. The other end of the first arm 33A in its longitudinal direction is coupled to the first friction member 40A so as to be rotatable relative to the first friction member 40A about an axis along the top-bottom direction of the vehicle.

The second arm 33B extends along the front-rear direction of the vehicle so as to connect between the housing 50 (e.g., the first cover member 81) and the second friction member 40B. The second arm 33B has a length along the front-rear direction of the vehicle. One end of the second arm 33B in its longitudinal direction is coupled to the housing 50 (e.g., the first cover member 81) so as to be rotatable relative to the housing 50 about an axis along the top-bottom direction of the vehicle. The other end of the second arm 33B in its longitudinal direction is coupled to the second friction member 40B so as to be rotatable relative to the second friction member 40B about an axis along the top-bottom direction of the vehicle.

The coupling member 34 extends along the vehicle width direction so as to connect between the pair of arms 33A and 33B. The coupling member 34 has a length along the vehicle width direction. One end of the coupling member 34 in its longitudinal direction is coupled to the middle portion of the first arm 33A in its longitudinal direction so as to be rotatable relative to this middle portion of the first arm 33A about an axis along the top-bottom direction of the vehicle. The other end of the coupling member 34 in its longitudinal direction is coupled to the middle portion of the second arm 33B in its longitudinal direction so as to be rotatable relative to this middle portion of the second arm 33B about an axis along the top-bottom direction of the vehicle.

The brake device 1 for a vehicle includes a reaction force receiving member 51 that receives the reaction force acting on the male screw 31 when the friction members 40A and 40B are pressed against the brake-applied member 41. The reaction force receiving member 51 is provided between the second cover member 82 of the housing 50 and the portion of the male screw 31 close to its end in one of the moving directions VA and VB (indicated by the arrow VB in the drawing) opposite to the direction for pressing the friction members 40A and 40B against the brake-applied member 41. The end of the male screw 31 in the direction VB indicated by the arrow in the drawing is fixed to the output rotator 21 via the clutch 7. The male screw 31 is capable of transmitting the rotational motion of the output rotator 21 to the female screw 32. The reaction force receiving member 51 is provided on the portion of the male screw 31 close to its end that penetrates into the second cover member 82 of the housing 50.

The housing 50 covers the input gear 70 from one side in the vehicle width direction. The case 23 of the speed reducer 20 is fixed to the housing 50 with bolts or other fastening members. The housing 50 receives the thrust from the male screw 31 and transmits the braking force. The housing 50 encloses a spacer 73 provided between the housing 50 and the reaction force receiving member 51 and a tapered roller bearing 74 provided between the reaction force receiving member 51 and the male screw 31.

For example, the spacer 73 is a slide bearing or a thrust bearing. The reaction force receiving member 51 receives thrust from the male screw 31 via the tapered roller bearing 74. The outer ring of the tapered roller bearing 74 is fixed to the reaction force receiving member 51 to allow the tapered roller bearing 74 to rotate with low friction while receiving a thrust load.

The housing 50 receives the thrust (ball screw reaction force) from the male screw 31 via the reaction force receiving member 51 and the tapered roller bearing 74. This prevents the thrust load from being applied to the speed reducer 20.

For example, when the output of the motor 2 is input to the input gear 70, a decelerated rotational force is output from the output rotator 21 of the speed reducer 20. In the clutch-off time (transmission state), the rotational force output from the output rotator 21 is input to the male screw 31. As described above, the rotational motion of the male screw 31 is converted into linear motion of the female screw 32 in the moving directions VA and VB.

The linear motion of the female screw 32 in the moving directions VA and VB is transmitted to the friction members 40A and 40B via the arms 33A and 33B and the coupling member 34. The arms 33A and 33B move in such a direction that the ends thereof coupled to the friction members 40A and 40B come closer to each other using the coupling member 34 as a fulcrum. As a result, the friction members 40A and 40B are pressed against the brake-applied member 41. Thus, the railway vehicle is braked.

### <Switching Operation Control of Clutch>

The switching operation control unit 12 controls the operation of the clutch 7 so as to switch the clutch 7 from the transmission state to the cutoff state when the motor 2 driven to press the friction members 40A and 40B against the brake-applied member 41 receives a load exceeding a predetermined level. The switching operation control unit 12 according to the embodiment switches the clutch 7 to the cutoff state when the current value of the current flowing to the motor 2 (an example of the load received by the motor 2) has exceeded a predetermined value.

For example, the predetermined value is determined in accordance with a brake instruction. For example, the switching operation control unit 12 may constantly monitor the current value of the current flowing to the motor 2.

### <Normal Brake Control>

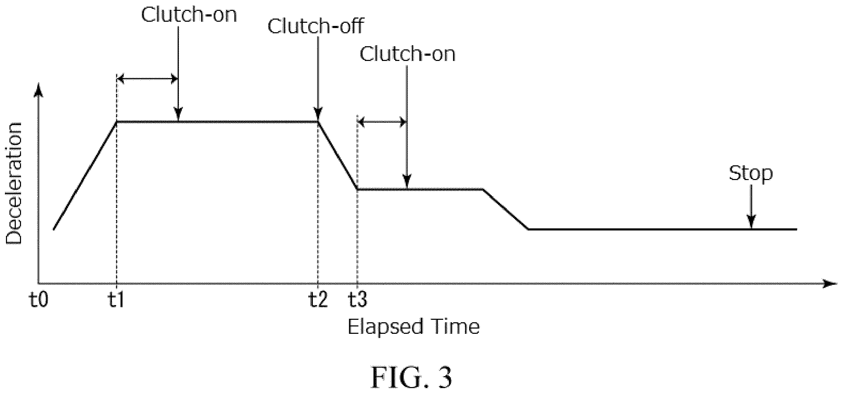

Fig. 3 illustrates normal brake control according to the embodiment. In Fig. 3, the vertical axis represents deceleration (corresponding to a braking force), and the horizontal axis represents the elapsed time. For example, in the normal brake control, the driver issues a brake instruction. As described above, the brake instruction is preset in accordance with operation positions of a brake handle operated by the driver (e.g., varying from notch 1 to notch 7).

For example, in an initial state, the clutch 7 is in the transmission state (clutch-off state) in which power transmission is allowed in the power transmission path between the speed reducer 20 and the conversion mechanism 30. The initial state corresponds to the start point (time t0) of the elapsed time in Fig. 3.

For example, in the normal brake control, the motor 2 is driven when the brake instruction is received in the clutch-off state. In the normal brake control, the power source 14 supplies electric power to the control circuit 13 for the motor 2.

The motor 2 is capable of forward and reverse rotation with the supplied electric power. The forward rotation of the motor 2 is the rotation in one direction around the rotation axis of the rotor 2b. The reverse rotation of the motor 2 is in the opposite direction to the forward rotation of the motor 2.

The forward and reverse rotation of the motor 2 is transmitted to the brake mechanism 5 through the shaft 4. For example, in the normal braking operation, forward rotation of the motor 2 tightens the braking, and reverse rotation thereof loosens the braking. The tightening of the braking refers to application of a braking force, and the loosening of the braking refers to release of the braking force.

For example, when the railway vehicle approaches a predetermined stop position (e.g., a station to stop at), the driver operates the brake handle to a predetermined notch (e.g., notch 7). For example, the forward rotation of the motor 2 tightens the braking in accordance with notch 7. In the normal brake control, when the braking force is to be retained, the clutch is put into the cutoff state (clutch-on) in which the power transmission is cut off and the pressing force applied to the friction members 40A, 40B is retained. In the normal brake control, when the brake instruction changes to a different value (e.g., a value different from notch 7) (e.g., when notch 4 is received), the clutch is put into the clutch-off state. For example, the forward rotation of the motor 2 tightens the braking in accordance with notch 4.

The driver is required to stop the railway vehicle accurately at the stop position and avoid excessive changes in deceleration before the stop, so as not to cause discomfort to passengers. For example, the driver may make fine adjustments by switching among the notches based on the conditions of the rail on which the wheels travel (e.g., rail surface condition), vehicle speed, temperature, humidity, weather conditions, etc.

### <Wheel Slide Control>

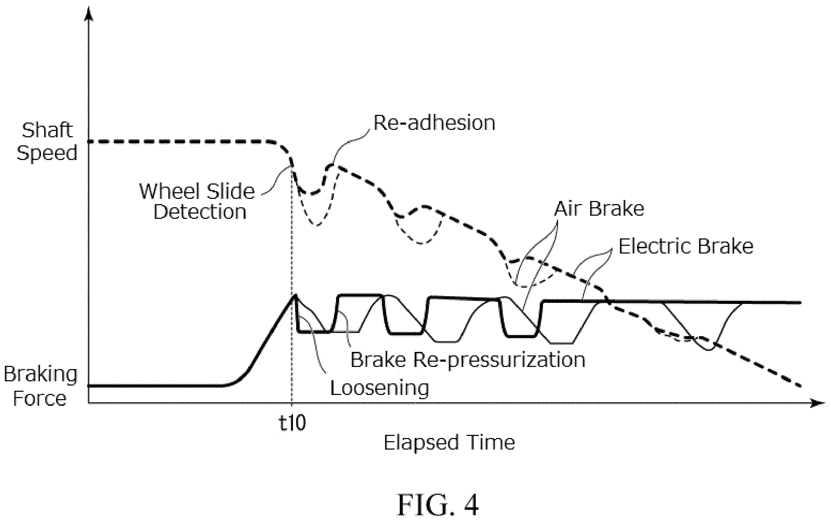

Fig. 4 illustrates wheel slide control according to the embodiment. Fig. 4 shows the shaft speed and the braking force, along with the elapsed time in the horizontal axis. In Fig. 4, the electric brake of the embodiment is shown with a thick line, and the air brake of a comparative example is shown with a thin line.

First, the adhesive brake is described. Railway vehicles employ the adhesive brake that utilizes adhesion between the wheel and the rail. For example, a decrease in adhesion due to wet conditions in rainy weather has a significant impact on braking distance. The wheel slide caused by the decreased adhesion increases the braking distance.

When wheel slide occurs, the wheel slide control reduces the braking force by a predetermined pattern in order to prevent a significant increase of the braking distance. For example, the predetermined pattern may be set based on rail surface condition, vehicle speed, temperature, humidity, weather conditions, etc.

For example, the normal wheel slide control is performed in the following order: wheel slide detection, loosening (brake loosening), re-adhesion, and brake re-pressurization (brake tightening). The re-adhesion refers to the friction occurring between the wheel and the rail again after the wheel slide has occurred. For example, the wheel slide control is performed until a predetermined amount of time has elapsed after the wheel side has occurred. For example, the wheel slide control may repeat brake loosening and brake tightening by driving the motor 2.

The wheel slide control of the electric brake according to the embodiment (shown with the thick line in Fig. 4) responds faster than the wheel slide control of the air brake as the comparative example (shown with the thin line in Fig. 4). In the wheel slide control according to the embodiment, the elapsed time from wheel slide detection to re-adhesion shown in Fig. 4 is shorter than that in the comparative example. In the wheel slide control according to the embodiment, the elapsed time from loosening to brake re-pressurization shown in Fig. 4 is shorter than that in the comparative example.

### <Normal Brake Control>

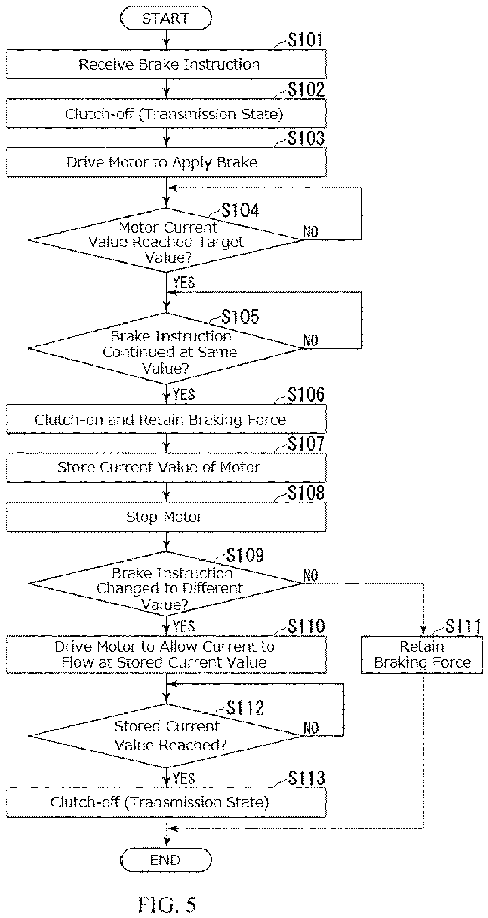

Fig. 5 is a flowchart of the normal brake control according to the embodiment. An example of the normal brake control will now be described with reference to the flowchart of Fig. 5. The flow in Fig. 5 is performed when a railway vehicle stops normally.

The first step is to receive a brake instruction (step S101). For example, in step S101, when the railway vehicle approaches a predetermined stop position (e.g., a station to stop at), the driver operates the brake handle to a predetermined notch (e.g., notch 7) as a brake instruction. The vehicle control device 10 then receives a predetermined notch (e.g., notch 7) as a brake instruction. After step S 101, the process proceeds to step S102.

In step S102, the clutch 7 is put into the clutch-off state (transmission state). The rotational force of the speed reducer 20 is then transmitted to the conversion mechanism 30. For example, the clutch-off state corresponds to the initial state at time to in Fig. 3. After step S102, the process proceeds to step S103.

In step S103, the motor is driven to apply the brake. For example, in step S103, the drive control unit 11 drives the motor 2 in accordance with the brake instruction (e.g., notch 7) received from the vehicle control device 10. For example, the current value flowing to the motor 2 may be constantly sensed by the current value sensing unit 92. The sensing result of the current value sensing unit 92 (the current value of the motor 2) is transmitted to the vehicle control device 10. For example, in step S103, feedback control is performed on the current value of the motor 2 so that the current value of the motor 2 reaches the target value. For example, the target value is determined in accordance with the brake instruction. After step S103, the process proceeds to step S104.

In step S104, it is determined whether the current value of the motor 2 has reached the target value. When it is determined that the current value of the motor 2 has not reached the target value (step S104: NO), the process returns to before step S104 and continues sensing the current value of the motor 2.

On the other hand, when it is determined that the current value of the motor 2 has reached the target value (step S104: YES), the process proceeds to step S105. In step S105, it is determined whether the brake instruction has continued at the same value for a predetermined amount of time or longer. For example, in step S105, it is determined whether the brake instruction (e.g., notch 7) received in step S101 has continued at the same value for two seconds (an example of the predetermined amount of time). For example, the period of two seconds (an example of the predetermined amount of time) corresponds to the elapsed time from time t1 in Fig. 3. When it is determined that the brake instruction has not continued at the same value for the predetermined amount of time or longer (step S105: NO), the process returns to before step S105.

On the other hand, when it is determined that the brake instruction has continued at the same value for the predetermined amount of time or longer (step S105: YES), the process proceeds to step S106. In other words, when the current value of the motor 2 has reached the target value and the brake instruction has continued at the same value for the predetermined amount of time (step S104: YES, and step S105: YES), the process proceeds to step S106.

In step S106, the clutch 7 is put into the clutch-on state (cutoff state) to retain the braking force. In step S106, the switching operation control unit 12 switches the clutch 7 to the cutoff state when it is determined that the brake instruction has continued at the same value for the predetermined amount of time (step S105: YES). This is the state in which the rotational force of the speed reducer 20 is not transmitted to the conversion mechanism 30, and the pressing force applied to the friction members 40A, 40B is retained. After step S106, the process proceeds to step S107.

In step S107, the current value of the motor 2 is stored. In step S107, the switching operation control unit 12 stores the current value of the current flowing to the motor 2 on the storage unit 90, before the clutch 7 is switched to the cutoff state and the motor 2 is stopped (an example of deceleration or stopping). For example, in step S107, the stored current value is the current value of the motor 2 taken before the braking force retention state is entered in step S106 (hereinafter also referred to as "the motor current value before the retention"). For example, the current value of the motor 2 may be constantly stored on the storage unit 90. After step S107, the process proceeds to step S108.

In step S108, the motor 2 is stopped (an example of deceleration or stopping). After step S108, the process proceeds to step S109.

In step S109, it is determined whether the brake instruction has changed to a different value. For example, in step S109, it is determined whether the brake instruction continuing at the same value (e.g., notch 7) has changed to a different value (e.g., notch 4). When it is determined that the brake instruction has not changed to a different value (step S109: NO), the process proceeds to step S111.

In step S111, the braking force retention state is continued. In other words, the braking force retention is continued while the brake instruction is at the same value.

On the other hand, when it is determined that the brake instruction has changed to a different value (step S109: YES), the process proceeds to step S110. In step S110, the motor is driven so that the current flows at the stored current value. In step S110, in response to the brake instruction changing to a different value (step S109: YES) after the clutch 7 is switched to the cutoff state and the motor 2 is stopped, the drive control unit 11 drives the motor 2 so that the current flows to the motor 2 at the current value stored on the storage unit 90, before the clutch 7 is switched from the cutoff state to the transmission state. For example, in step S110, the motor 2 is driven so that the current flows to the motor 2 at the motor current value before the retention. After step S110, the process proceeds to step S112.

In step S112, it is determined whether the stored current value has been reached. For example, in step S112, it is determined whether the current value of the current flowing when the motor 2 is driven has reached the motor current value before the retention. When it is determined that the stored current value has not been reached (step S112: NO), the process returns to before step S112.

On the other hand, when it is determined that the stored current value has been reached (step S112: YES), the process proceeds to step S113. In step S113, the clutch 7 is put into the clutch-off state (transmission state). In step S113, the switching operation control unit 12 switches the clutch 7 to the transmission state when it is determined that the current value of the current flowing when the motor 2 is driven has reached the current value stored on the storage unit 90 (step S112: YES). For example, the timing at which to switch to the clutch-off state (transmission state) corresponds to the time t2 in Fig. 3.

After step S113, when the current value of motor 2 has reached the target value and the brake instruction has continued at the same value for a predetermined amount of time, the clutch may be switched to the clutch-on state (cutoff state). For example, when the brake instruction has continued at the same value for two seconds (an example of the predetermined amount of time) from the time t3 in Fig. 3, the clutch may be switched to the clutch-on state (cutoff state).

### <Wheel Slide Control>

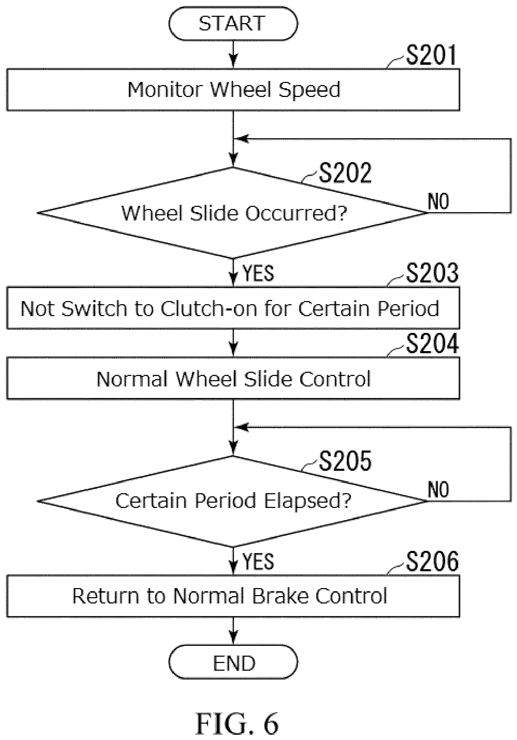

Fig. 6 is a flowchart of the wheel slide control according to the embodiment. An example of the wheel slide control will now be described with reference to the flowchart of Fig. 6. The flow in Fig. 6 is performed by intervening in the normal brake control. For example, the wheel slide control is performed in parallel with the normal brake control, or it is performed to interrupt the normal brake control in predetermined cases.

The first step is to monitor a wheel speed (step S201). For example, in step S201, the wheel slide detection unit 91 detects the wheel slide based on a comparison between the wheel speed sensed by the rotation sensor described above and the vehicle speed. For example, the wheel slide may be constantly monitored by the wheel slide detection unit 91. After step S201, the process proceeds to step S202.

In step S202, it is determined whether the wheel slide has occurred. For example, in step S202, it is determined that the wheel slide has occurred when the above-mentioned speed difference exceeds the threshold value, and it is determined that the wheel slide has not occurred when the above-mentioned speed difference is equal to or less than the threshold value. When it is determined that the wheel slide has not been occurred (step S202: NO), the process returns to before step S202.

When it is determined that the wheel slide has occurred (step S202: YES), the process proceeds to step S203. In step S203, the clutch is not switched to the clutch-on state for a predetermined amount of time. In step S203, the switching operation control unit 12 does not switch the clutch 7 from the transmission state to the cutoff state until a predetermined amount of time has elapsed after the wheel slide has occurred in the railway vehicle (step S202: YES). For example, in step S203, the clutch 7 is not switched to the clutch-on state (cutoff state) until 20 seconds (an example of the predetermined amount of time) have elapsed after the wheel slide has occurred. For example, the period of 20 seconds (an example of the predetermined amount of time) after the wheel side has occurred corresponds to the elapsed time from the time t10 in Fig. 4 at which the wheel slide is detected. After step S203, the process proceeds to step S204.

In step S204, the normal wheel slide control is performed. For example, the normal wheel slide control corresponds to the control shown in Fig. 4 performed in the following order: wheel slide detection, loosening (brake loosening), re-adhesion, and brake re-pressurization (brake tightening). After step S204, the process proceeds to step S205.

In step S205, it is determined whether a predetermined amount of time has elapsed. For example, in step S205, it is determined whether the predetermined amount of time (e.g., 20 seconds) of step S203 has elapsed. When it is determined that the predetermined amount of time has not elapsed (step S205: NO), the process returns to before step S205 and continues the normal wheel slide control.

On the other hand, when it is determined that the predetermined amount of time has elapsed (step S205: YES), the process proceeds to step S206. In step S206, the process returns to the normal brake control. For example, the normal brake control corresponds to the flow in Fig. 5.

### <Advantageous Effects>

As described above, the brake device 1 for a vehicle includes : a motor 2; a speed reducer 20 configured to receive an output of the motor 2 and to output a decelerated rotational force; a conversion mechanism 30 for converting a rotational motion output from the speed reducer 20 into a linear motion; friction members 40A and 40B configured to receive the linear motion to be pressed against a brake-applied member 41 of a railway vehicle, so as to brake the railway vehicle; a clutch 7 disposed in a power transmission path between the speed reducer 20 and the friction members 40A and 40B, the clutch being configured to switch between a transmission state in which power transmission is allowed in the power transmission path and a cutoff state in which the power transmission is cut off and a pressing force applied to the friction members 40A and 40B is retained; a drive control unit 11 for driving the motor 2 in accordance with a brake instruction received from a vehicle control device 10; and a switching operation control unit 12 configured to control operation of the clutch 7 so as to switch the clutch 7 from the transmission state to the cutoff state when the motor 2 driven to press the friction members 40A and 40B against the brake-applied member 41 receives a load exceeding a predetermined level. The clutch 7 is disposed between the speed reducer 20 and the conversion mechanism 30. The brake device 1 for a vehicle further includes a current value sensing unit 92 for sensing the current value of the current flowing to the motor 2. The switching operation control unit 12 switches the clutch 7 to the cutoff state when the current value of the current flowing to the motor 2 has exceeded a predetermined value.

With this configuration, since the power transmission in the power transmission path is cut off when the current value of the current flowing to the motor 2 has exceeded a predetermined value, the reaction force (brake reaction force) generated when the friction members 40A and 40B are pressed against the brake-applied member 41 does not act on the speed reducer 20. This can lower the possibility of damage to the speed reducer 20 due to the brake reaction force. In addition, since the clutch 7 retains the pressing force applied to the friction members 40A and 40B, the braking function is not degraded. This can lower the possibility of damage to the speed reducer 20 due to the brake reaction force without degrading the braking function.

The switching operation control unit 12 according to the embodiment switches the clutch 7 to the cutoff state when it is determined that the brake instruction has continued at the same value for the predetermined amount of time. With this configuration, the determination that the brake instruction has continued at the same value for a predetermined amount of time confirms that there is no change of the brake instruction. Therefore, the number of times the clutch 7 is operated can be reduced compared to the case where the clutch 7 is controlled several times when the brake instruction changes in less than a predetermined amount of time. Consequently, it is possible to prolong the service life of the clutch 7.

The switching operation control unit 12 according to the embodiment stores the current value of the current flowing to the motor 2 on the storage unit 90, before the clutch 7 is switched to the cutoff state and the motor 2 is stopped. In response to the brake instruction changing to a different value after the clutch 7 is switched to the cutoff state and the motor 2 is stopped, the drive control unit 11 drives the motor 2 so that the current flows to the motor 2 at the current value stored on the storage unit 90, before the clutch 7 is switched from the cutoff state to the transmission state. With this configuration, the motor 2 can be driven so that the current that was flowing to the motor 2 before the clutch 7 was switched to the cutoff state flows to the motor 2, before the clutch 7 is switched from the cutoff state to the transmission state in order to change the pressing force applied to the friction members 40A, 40B in accordance with the change of the brake instruction. This prevents the pressing force applied to the friction members 40A, 40B from changing due to switching of the clutch 7.

The switching operation control unit 12 according to the embodiment switches the clutch 7 to the transmission state when it is determined that the current value of the current flowing when the motor 2 is driven has reached the current value stored on the storage unit 90. With this configuration, excessive load (shock load) can be prevented from being applied to the clutch 7, as compared to the case where the motor 2 is driven without determining that the stored current value has been reached.

The brake device for a vehicle according to the embodiment further includes the wheel slide detection unit 91 for detecting the wheel slide of a railway vehicle. When the wheel slide has occurred in a railway vehicle, the switching operation control unit 12 does not switch the clutch 7 from the transmission state to the cutoff state until a predetermined amount of time has elapsed after the wheel slide has occurred. For example, upon occurrence of the wheel slide in a railway vehicle, the pressing force applied to the friction members 40A and 40B may be changed by driving the motor 2 in order to clear the wheel slide. In this case, the clutch 7 can remain switched to the transmission state, and thus the number of times the clutch 7 is operated can be reduced compared to the case where the clutch 7 is controlled several times by switching the clutch 7 to the cutoff state. Consequently, it is possible to prolong the service life of the clutch 7.

### <Variations>

The technical scope of the present invention is not limited to the embodiments described above but is susceptible of various modification within the purport of the present invention.

In the embodiment described above, the clutch is provided between the speed reducer and the conversion mechanism, but this example is not limitative. For example, the clutch may be provided between the conversion mechanism and the friction members. For example, the clutch may be provided anywhere in the power transmission path between the speed reducer and the friction members. For example, the clutch can be provided in various manners in accordance with design specifications.

In the embodiment described above, the brake device for a vehicle further includes a current value sensing unit for sensing the current value of the current flowing to the motor, and the switching operation control unit switches the clutch to the cutoff state when the current value of the current flowing to the motor has exceeded a predetermined value, but this example is not limitative. For example, the brake device for a vehicle does not necessarily include a current value sensing unit for sensing the current value of the current flowing to the motor. For example, the brake device for a vehicle may further include a reaction force sensing unit for sensing a reaction force (brake reaction force) generated when the friction members are pressed against the brake-applied member, and the switching operation control unit may switch the clutch to the cutoff state when the brake reaction force has exceeded a predetermined value. For example, the reaction force sensing unit may be the clutch itself or a sensor. For example, the switching operation control unit may switch the clutch to the cutoff state when at least one of the current value of the current flowing to the motor 2 or the brake reaction force has exceeded a predetermined value. For example, the switching operation control unit may control the operation of the clutch in any manner to switch the clutch from the transmission state to the cutoff state when the motor driven to press the friction members against the brake-applied member receives a load exceeding a predetermined level. For example, the switching operation control unit can perform control in various manners in accordance with design specifications.

In the embodiment described above, the switching operation control unit switches the clutch to the cutoff state when it is determined that the brake instruction has continued at the same value for the predetermined amount of time, but this example is not limitative. For example, the clutch may be controlled several times when the brake instruction changes in less than a predetermined amount of time. For example, the clutch can be controlled in various manners in accordance with design specifications.

In the embodiment described above, the switching operation control unit stores the current value of the current flowing to the motor on the storage unit, before the clutch is switched to the cutoff state and the motor is stopped, and in response to the brake instruction changing to a different value after the clutch is switched to the cutoff state and the motor is stopped, the drive control unit drives the motor so that the current flows to the motor at the current value stored on the storage unit, before the clutch is switched from the cutoff state to the transmission state, but this example is not limitative. For example, the switching operation control unit does not necessarily store the current value of the current flowing to the motor on the storage unit, before the clutch is switched to the cutoff state and the motor is stopped. For example, the switching operation control unit may store on the storage unit the reaction force (brake reaction force) generated when the friction members are pressed against the brake-applied member, before the clutch is switched to the cutoff state and the motor is stopped. In response to the brake instruction changing to a different value after the clutch is switched to the cutoff state and the motor is stopped, the drive control unit may drive the motor so that the current flows to the motor at the current value according to the brake reaction force stored on the storage unit, before the clutch is switched from the cutoff state to the transmission state. For example, it is also possible to switch the clutch to the cutoff state and decelerate the motor (an example of deceleration or stopping) instead of stopping it. For example, the motor can be driven in various manners in accordance with design specifications.

In the embodiment described above, the switching operation control unit switches the clutch to the transmission state when it is determined that the current value of the current flowing when the motor is driven has reached the current value stored on the storage unit, but this example is not limitative. For example, the switching operation control unit may drive the motor without determining that the stored current value has been reached. For example, the motor can be driven in various manners in accordance with design specifications.

In the embodiment described above, the brake device for a vehicle further includes a wheel slide detection unit for detecting wheel slide of the railway vehicle, and when the wheel slide has occurred in the railway vehicle, the switching operation control unit does not switch the clutch from the transmission state to the cutoff state until a predetermined amount of time has elapsed after the wheel slide has occurred, but this example is not limitative. For example, the brake device for a vehicle does not necessarily include a wheel slide detection unit for detecting wheel slide of the railway vehicle. For example, when the wheel slide has occurred in the railway vehicle, the switching operation control unit may control the clutch several times by switching the clutch to the cutoff state. For example, the clutch can be controlled upon occurrence of wheel slide in various manners in accordance with design specifications.

In the embodiments described above, the conversion mechanism is a ball screw mechanism, but this example is not limitative. For example, if the conversion mechanism is not a ball screw mechanism, it may include a belt pulley mechanism that transmits power with a belt stretched between pulleys. For example, the conversion mechanism can be configured in various manners in accordance with design specifications.

In the embodiments described above, the speed reducer includes an eccentric oscillation gear mechanism, but this example is not limitative. For example, the speed reducer may include a planetary gear mechanism. For example, the speed reducer may be a harmonic speed reducer. For example, the speed reducer can be configured in various manners in accordance with design specifications.

In the embodiments described above, the clutch is a non-excited electromagnetic clutch, but this example is not limitative. For example, the clutch may be an excited electromagnetic clutch. For example, in the clutch-on time, the clutch may be put into the transmission state in which the rotational force of the speed reducer is transmitted to the conversion mechanism. For example, in the clutch-off time, the clutch may be put into the cutoff state in which the rotational force of the speed reducer is not transmitted to the conversion mechanism, and the pressing force applied to the friction members is retained. For example, the clutch may include a friction-plated (with single or multiple plates), toothed, or other clutch mechanism. For example, the clutch may include a mechanical clutch mechanism and brake mechanism. The clutch may be configured in any manner to be able to switch between a transmission state and a cutoff state. In the transmission state, power transmission is allowed in the power transmission path between the speed reducer and the friction members, and in the cutoff state, the power transmission is cut off and the pressing force applied to the friction members is retained. For example, the clutch can be configured in various manners in accordance with design specifications.

In the embodiments described above, the driver issues the brake instruction (manual operation), but this example is not limitative. For example, the brake instruction may be issued by automatic drive control. For example, if the driving pattern of the railway vehicle is determined in advance, the brake instruction may be issued in accordance with estimation based on the position of the railway vehicle. For example, the position of the railway vehicle may be measured based on track circuits, track antennas, Global Positioning System (GPS), etc. For example, the aspect of the brake instruction can be modified in accordance with design specifications.

In the embodiments described above, when brake is applied by driving the motor in the normal brake control, feedback control is performed on the current value of the motor such that the current value of the motor reaches the target value, but this example is not limitative. For example, if the driving pattern of the railway vehicle is determined in advance, feed-forward control may be performed on the current value of the motor such that the current value of the motor reaches the target value. For example, the motor can be driven in various manners in accordance with design specifications.

In the embodiments described above, a pair of friction members constitute a disc brake unit (DBU) that sandwiches the disc as the brake-applied member on both sides (disc braking system), but this example is not limitative. For example, the brake device may constitute a tread brake unit (TBU) in which a friction member is pressed against the tread of a wheel as the brake-applied member on one side (wheel tread braking system). For example, the aspect of the braking system can be modified in accordance with design specifications.

In the embodiments described above, the description was focused on a brake device for a railway vehicle, but this example is not limitative. For example, the present invention may be applied to vehicles other than railway vehicles. For example, the brake device for a vehicle may be applied to automobiles. For example, the present invention may be applied to bicycles, motorcycles, four-wheeled vehicles, construction vehicles, and industrial vehicles.

The elements of the embodiments described above may be replaced with known elements within the purport of the present invention. Further, the modifications described above may be combined. In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention. According to the foregoing embodiments disclosed herein, a plurality of functions are distributively provided. Some or all of the functions may be integrated. Any one of the functions may be partly or entirely segmented into a plurality of functions, which are distributively provided. Irrespective of whether or not the functions are integrated or distributed, they are acceptable as long as they are configured to attain the object of the invention.

### LIST OF REFERENCE NUMBERS

- 1: brake device for a vehicle
- 2: motor (electric motor)
- 7: clutch
- 10: vehicle control device (external device)
- 11: drive control unit
- 12: switching operation control unit (control unit for controlling operation of the clutch)
- 20: speed reducer
- 30: conversion mechanism
- 40A, 40B: friction member
- 41: brake-applied member
- 90: storage unit
- 91: wheel slide detection unit
- 92: current value sensing unit

## Claims

1. A brake device (1) for a vehicle, comprising:
an electric motor (2);
a speed reducer (20) configured to receive an output of the electric motor (2) and to output a decelerated rotational force;
a conversion mechanism (30) for converting a rotational motion output from the speed reducer (20) into a linear motion;
a friction member (40A, 40B) configured to receive the linear motion to be pressed against a brake-applied member (41) of a vehicle, so as to brake the vehicle;
a clutch (7) disposed in a power transmission path between the speed reducer (20) and the friction member (40A, 40B), the clutch being configured to switch between a transmission state in which power transmission is allowed in the power transmission path and a cutoff state in which the power transmission is cut off and a pressing force applied to the friction member (40A, 40B) is retained;
a drive control unit (11) for driving the electric motor (2) in accordance with a brake instruction received from an external device (10); and
a control unit (12) configured to control operation of the clutch (7) so as to switch the clutch (7) from the transmission state to the cutoff state when the electric motor (2) driven to press the friction member (40A, 40B) against the brake-applied member (41) receives a load exceeding a predetermined level.

2. The brake device (1) for a vehicle according to claim 1, wherein the control unit (12) switches the clutch (7) to the cutoff state when it is determined that the brake instruction has continued at a same value for a predetermined amount of time.

3. The brake device (1) for a vehicle according to claim 1 or 2,
wherein the control unit (12) stores a current value of a current flowing to the electric motor (2) on a storage unit (90), before the clutch (7) is switched to the cutoff state and the electric motor (2) is decelerated or stopped, and
wherein in response to the brake instruction changing to a different value after the clutch (7) is switched to the cutoff state and the electric motor (2) is decelerated or stopped, the drive control unit (11) drives the electric motor (2) such that a current flows to the electric motor (2) at the current value stored on the storage unit (90), before the clutch (7) is switched from the cutoff state to the transmission state.

4. The brake device (1) for a vehicle according to claim 3, wherein the control unit (12) switches the clutch (7) to the transmission state when it is determined that a current value of a current flowing when the electric motor (2) is driven has reached the current value stored on the storage unit (90).

5. The brake device (1) for a vehicle according to claim 1 or 2, further comprising:
a wheel slide detection unit (91) for detecting wheel slide of the vehicle,
wherein when the wheel slide has occurred in the vehicle, the control unit (12) does not switch the clutch (7) from the transmission state to the cutoff state until a predetermined amount of time has elapsed after the wheel slide has occurred.

6. The brake device (1) for a vehicle according to claim 1 or 2, wherein the clutch (7) is disposed between the speed reducer (20) and the conversion mechanism (30).

7. The brake device (1) for a vehicle according to claim 1 or 2, further comprising:
a current value sensing unit (92) for sensing a current value of a current flowing to the electric motor (2),
wherein the control unit (12) switches the clutch (7) to the cutoff state when the current value has exceeded a predetermined value.
